# EUROPEAN PATENT APPLICATION

(11) **EP 2 202 670 A2**
(43) Date of publication of application: **30.06.2010**
(21) Application number: 09177101.4
(22) Date of filing: 25.11.2009
(51) Int. Cl.: G06K 9/00, H04N 7/18

(54) **Monitoring system and method**

(30) Priority: 26.12.2008 JP 2008335326
(71) Applicant: FUJITSU LIMITED, Kawasaki-shi, Kanagawa 211-8588 (JP)
(72) Inventor: Teranishi, Kotaro, Kawasaki-shi Kanagawa 211-8588 (JP); Yamaji, Takayuki, Kawasaki-shi Kanagawa 211-8588 (JP); Sakaguchi, Kazutoshi, Kawasaki-shi Kanagawa 211-8588 (JP); Horie, Takefumi, Kawasaki-shi Kanagawa 211-8588 (JP); Morioka, Makoto, Kawasaki-shi Kanagawa 211-8588 (JP); Hirano, Takashi, Kawasaki-shi Kanagawa 211-8588 (JP)
(74) Representative: Fenlon, Christine Lesley

(57) **Abstract**

A monitoring system that monitors a person, the monitoring system including: a camera that captures an image of the individual; a transmission device that transmits an image; and, a processing device that is configured to: detect a change in facial expression of the individual from an image captured by the camera; identify the individual with the change in facial expression; and, transmit to a destination associated with the identified individual an image including the change in facial expression through the transmission device.

## Description

### CROSS-REFERENCE TO RELATED APPLICATION

This application is based upon and claims the benefit of priority of the prior Japanese Patent Application No. 2008-335326, filed on December 26, 2008, the entire contents of which are incorporated herein by reference.

### FIELD

The embodiment discussed herein is related to a monitoring system.

### BACKGROUND

Known in the art is a system capturing an image of an individual for monitoring purposes. There are monitoring systems designed to capture images of children in school facilities, record the captured images, and enable the guardians of the children to view the captured images at their homes so as to enable the guardians to watch over their children even while the children are at those facilities. These monitoring systems have the function of monitoring the children by alerting a facility administrator to confirm if a child is in danger or if something abnormal has happened to it when a child remains at the same position in the facility for a long period of time.

Japanese Laid-Open Patent Publication No. 2008-40738 is disclosed.

### SUMMARY

According to embodiments of an aspect of the invention, A monitoring system that monitors a person, the monitoring system including: a camera that captures an image of the individual; a transmission device that transmits an image; and, a processing device that is configured to:
detect a change in facial expression of the individual from an image captured by the camera; identify the individual with the change in facial expression; and, transmit to a destination associated with the identified individual an image including the change in facial expression through the transmission device.

Desirable features and advantages of the invention will be realized and attained by means of the components and combinations particularly pointed out in the claims. It is to be understood that both the foregoing general description and the following detailed description are exemplary and explanatory and are not restrictive of the invention, as claimed.

### BRIEF DESCRIPTION OF DRAWINGS

These and other features of embodiments of the present invention will become clearer from the following description of the preferred embodiments given with reference to the attached drawings, wherein:
FIG. 1 is an example of a hardware configuration of the monitoring apparatus embodying the present invention;
FIG. 2 is an example of functionality architecture implemented by the monitoring apparatus embodying the present invention;
FIG. 3 is an example of an image acquired by facial expression recognition function unit embodying the present invention;
FIG. 4 is an example of a method of identifying a person by person identifying function unit embodying the present invention;
FIGS. 5A and 5B are examples of an image enlarged by image enlarging function unit embodying the present invention;
FIG. 5C is an example, embodying the present invention, of processing of enlarging an image by image enlarging function unit when more than one person change their facial expressions;
FIG. 6 is an example of flowchart of monitoring processing by a monitoring system embodying the present invention; and
FIG. 7 is an embodiment of the monitoring system embodying the present invention.

### DESCRIPTION OF EMBODIMENTS

However, if just monitoring whether or not a monitored party remains at a certain position for a predetermined time, it is not possible to monitor if something happens to the monitored party within a predetermined time. For this reason, a conventional monitoring system does not provide a function of constant monitoring of a monitored party. Further, some monitoring parties utilizing monitoring systems are busy with housework, jobs, etc. Such monitoring parties cannot constantly monitor the monitored parties using the conventional monitoring system.

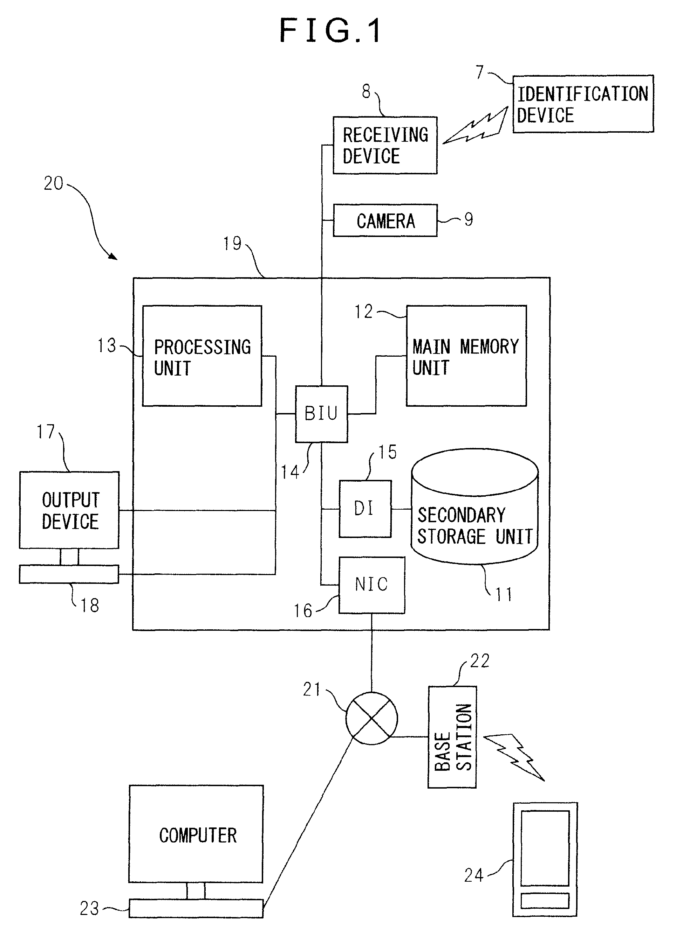

Below, an embodiment of a monitoring system will be explained referring to the drawings. Referring to the FIG. 1, there is illustrated an example of the hardware configuration of the monitoring system. In FIG. 1, numeral 1 is a monitoring system. Numeral 20 is a monitoring device. Numeral 11 is a secondary storage unit. Numeral 12 is a main memory unit. Numeral 13 is a processing unit. Numeral 14 is a bus interface unit. Numeral 15 is a disk interface. Numeral 16 is a network interface card (NIC). Numeral 17 is an output device. Numeral 18 is an input device. Numeral 8 is a receiving device. Numeral 9 is a camera. Numeral 21 is a network such as internet. Numeral 22 is a base station for radio communication. Numeral 23 is a computer. Numeral 24 is a communication terminal equipment. Numeral 7 is an Identification device such as integrated circuit (IT) tag.

As illustrated in FIG. 1, monitoring system 1 has monitoring device 20, receiving device 8, and camera 9. Monitoring device 20 has secondary storage unit 11, main memory unit 12, processing unit 13, bus interface unit 14, disk interface 15, network interface card 16, output device 17, and input device 18. Further, monitoring device 20 is connected via network 21 to computer 23, base station 22, and communication terminal equipment 24.

Secondary storage unit 11 is, for example, magnetic hard drive, solid state drive (SSD) which includes nonvolatile memory such as flash memory, floppy ® disk drive, or optical disk drive. Secondary storage unit 11 reads program that is written by programming language, and that is stored in storage media such as optical disk or floppy ® disk to store program in Secondary storage unit 11.

Main memory unit 12 is, for example, main memory, cache memory or flush memory. Main memory unit 12 can temporary store program that is stored in secondary storage unit 11. Main memory is, for example, Single Inline Memory Module (SIMM) or Dual Inline Memory Module (DIMM). Flush memory is, for example, Electrically Erasable and Programmable Read Only Memory (EEPROM).

Processing unit 13 is a device that performs arithmetic processing such as four arithmetic operations and logical operation. Processing unit 13 execute compile program in order to convert program that is stored in secondary storage unit 11 or main memory unit 12 to executable instructions that is coded in machine language. Processing unit 13 reads executable instructions from main memory unit 12 or convert program to executable instructions at runtime, and then, store executable instructions to register included in processing unit 13. Further, processing unit 13 executes instructions stored in the register to perform a variety of calculations and controls.

Bus interface unit 14 is, for example, a chip that connects to main memory unit 12, processing unit 13, and disk interface 15. Bus interface unit 14 includes control circuit that operates based on a standard such as Accelerated Graphics Port (AGP) or Peripheral Component Interconnect Express (PCI Express). Bus interface unit 14 may include control circuits for peripheral Component Interconnect (PCI) bus, IDE, keyboard port, mouth port, USB. Bus interface unit 14 is connected via bus to output device 17 and input device 18 that are arranged outside of monitoring device 20. Bus interface unit 14 may be more than two chips that are a high-speed communication chip and a low-speed communication chip.

Disk interface 15 is, for example, a circuit for connecting processing unit 13 with secondary storage unit 11. Disk interface 15 operates based on a standard, for example, Serial ATA, SCSI, Fibre Channel.

Network interface card 16 is a hardware resource that is used for connecting other computers in network 21. Network interface card 16 includes a circuit that communicate with other computers using a link or physical layer such as Ethernet® or token ring.

Output device 17 outputs processing status or processing result that were sent from processing unit 13. Output device 17 is, for example, display or printer. Input device 18 outputs information to monitoring device 20. Input device 18 is, for example, keyboard or mouse.

Identification device 7 is an integrated circuit that stores identification information, and transmit using radio communication the identification information to receiving device 8. Identification device 7 is, for example, a passive Radio Frequency Identification (RFID) tag which is a passive RFID tag that operates using radio waves as energy source, or an active RFID tag that includes a battery and voluntary transmit radio waves using the battery. Each identification device 7 has an unique identification information in order to identify itself. Identification information that is applied to Identification device 7 is used to identify a person that possesses identification device 7. Secondary storage unit 11 stores identification device management information 44 that associates identification information applied to identification device with possessor of identification device.

Receiving device 8 is, for example, an antenna device that outputs electromagnetic wave to identification device 7, and/or receives identification information which is sent from identification device 7. Receiving device 8 can be located in the establishment where monitoring system 1 is located. Each of receiving devices is located at a space between the receiving devices. Further, identification information is applied to each receiving device, in order to identify itself. Secondary storage unit 11 stores receiving device management information 43 that associates identification information of receiving device with installation position of receiving device.

Computer 23 receives data via network interface card thereof (not illustrated) data from monitoring device 20, and outputs data via display. Communication terminal equipment 24 receives radio waves from base station 22 or transmits radio waves to base station 22 to receive data from monitoring device 20 and output data via display.

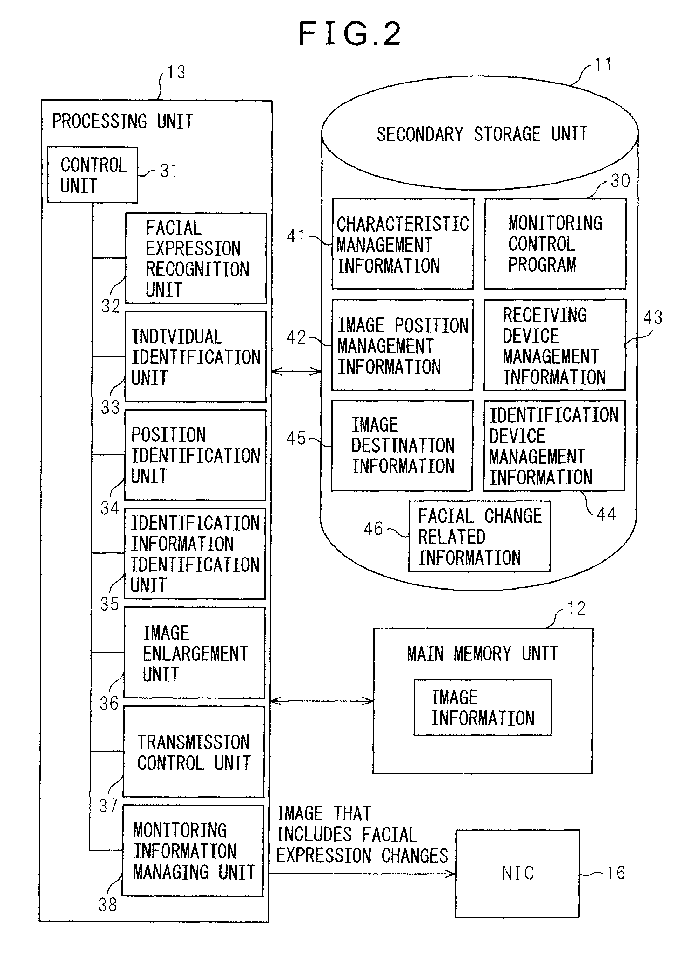

Referring to the FIG. 2, there is illustrated an example of the functions mounted by the monitoring system. The functions mounted in the processing device is, for example, control unit 31, facial expression recognition unit 32, individual identification unit 33, position identification unit 34, ID information identification unit 35, image enlargement unit 36, transmission control unit 37, and monitoring information management unit 38.

Monitoring control program 30 describes the functions defined by control unit 31 to monitoring information management unit 38 by a programming language. Processing unit 13 can run monitoring control program 30 so as to execute the functions of control unit 31 to monitoring information management unit 38. Secondary storage unit 11 stores a monitoring control program illustrated by 30, characteristic management information illustrated by 41, image position management information illustrated by 42, receiving device management information illustrated by 43, ID device management information illustrated by 44, image destination information illustrated by 45, and facial change related information illustrated by 46. The main storage device 12 or secondary storage unit 11 stores image information transmitted from the camera 9.

Below, the functions performed by the monitoring system 20 will be explained in order. Control unit 31 has a control function of controlling execution of the facial expression recognition unit 32 to monitoring information management unit 38 and controlling the sharing of events of the units. Control function of control unit 31 is a function first executed after execution of monitoring control program 30.

Facial expression recognition unit 32 reads out image information stored in secondary storage unit 11 or main storage device 12 and detects the face of the individual from the image. As the facial detection method, it is possible to locate the eyes, nose, mouth, or other parts of the face in the image to detect a face. The parts of the face can be detected by preparing a representative image illustrating the parts in advance and finding the area most matching with the representative image in the image.

Facial expression recognition unit 32 measures a change in the detected parts of the face. Facial expression recognition unit 32 can measure a change in facial expression from a change in the degree of opening of the eyes or mouth, the shape of the corners of the eyes, etc. at the detected parts of the face. By quantitatively evaluating the angles, ratios, or other conditions of the parts of the face such as defining the corners of the eyes dropping by a predetermined angle and/or the eyes being narrowed by a predetermined rate as a smiling expression or the corners of the mouth being lowered by a predetermined angle as a crying expression, facial expression recognition unit 32 can capture facial changes of the monitored party such as a smiling expression, crying expression, or angry expression.

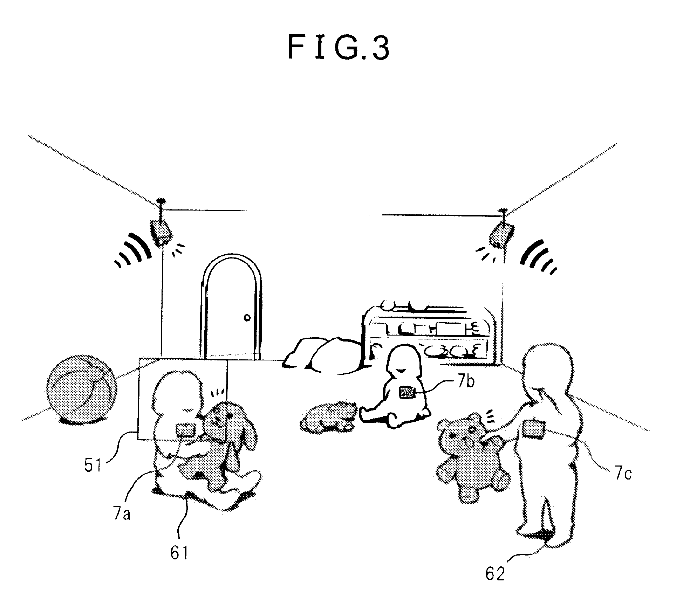

Using FIG. 3, an example of an image acquired by facial expression recognition unit 32 is illustrated. Reference numeral 51 illustrates an area in which a facial change is detected. Reference numerals 7a, 7b, and 7c illustrate ID devices attached to separate individuals. Facial expression recognition unit 32 can identify image area 51 where a facial change occurs when capturing a facial change in the image.
In this way, facial expression recognition unit 32 can recognize image area 51 in the image at which a facial change occurs and whether that facial change is a smiling expression, crying expression, angry expression, or other change in expression. Facial expression recognition unit 32 sends information relating to image area 51 and facial change to control unit 31 or position identification unit 34.

Individual identification unit 33 has the function of identifying the individual with the change in facial expression in the image where the facial change has occurred. The characteristic management information 41 is information linking an individual and a pattern of characteristics of that individual. Individual identification unit 33 extracts characteristics from the image and finds characteristic parameters or characteristic vectors. Individual identification unit 33 can identify characteristic quantities matching with the pattern of characteristics of the characteristic management information 41 from the obtained characteristic quantities or close characteristic quantities to identify the individual caught in the image. Note that, the function of identifying an individual in an image by individual identification unit 33 can also be performed using the later explained position identification unit 34 and ID information identification unit 35.

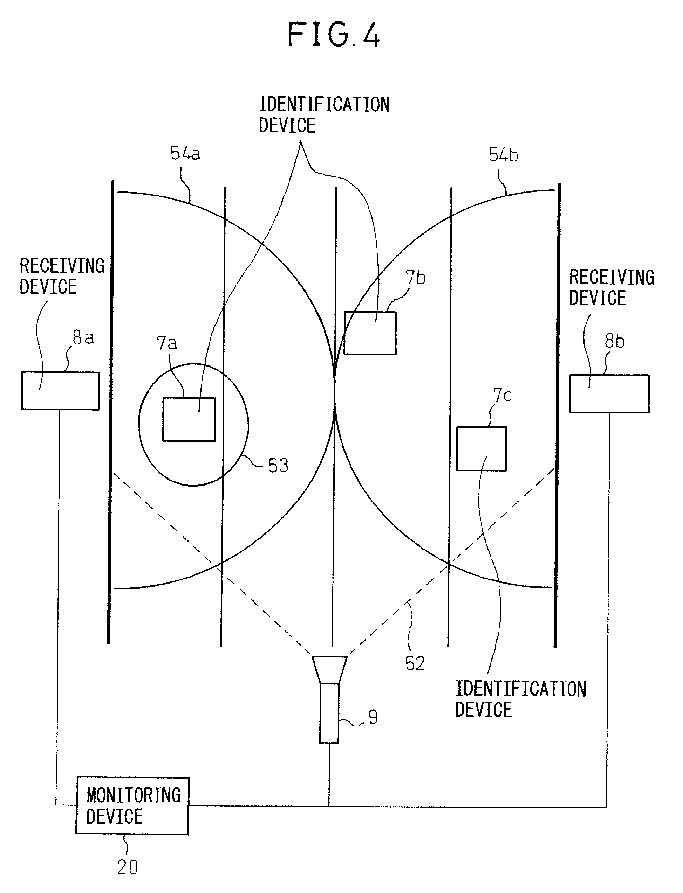

Position identification unit 34 has the function of identifying the position of an individual with a change in facial expression in the image. FIG. 4 is a plan view illustrating the relationship between an image capture area of camera 9 and a reception area cf a receiving device. Reference numerals 8a and 8b illustrated in FIG. 4 illustrate receiving devices, 54a and 54b illustrate reception areas of receiving device 8a and receiving device 8b, and 52 illustrates the image capture range of the camera 9. Reference numerals 7a, 7b, and 7c illustrate ID devices attached to respective individuals. The image acquired in the capture range 52 captured by the camera 9 corresponds to the acquired image illustrated in FIG. 3. Image position management information 42 illustrated in FIG. 2 is information linking image areas in an image and position information. For example, in the image position management information 42, the image area illustrated in FIG. 3 is defined linked with a specific position of the monitored area. For this reason, the position identification unit 34 can refer to the image position management information 42 to identify the position 53 of the monitoring area corresponding to the image area 51 illustrated in FIG. 3 (FIG. 4).

ID information identification unit 35 identifies the receiving device having as a reception area the position identified by the position identification unit 34 and further provides a function of identifying ID information received by the identified receiving device. Due to this function, by having the position where a facial expression has occurred notified from the position identification unit 34, it is possible to identify the individual with the change in facial expression.

Using FIG. 4, an example of the method of identifying an individual by ID information identification unit 35 will be explained. As illustrated in FIG. 4, when an individual having an ID device 7a enters a reception area 54a, receiving device 8a receives ID information distinctive to the ID device 7a. Further, receiving device 8a sends ID information of ID device 7a and a receiving device ID number identifying receiving device 8a to monitoring system 20.

Receiving device management information 43 is information linking Receiving devices and reception areas of Receiving devices. ID information identification unit 35 is notified when a facial change has occurred at a position 53 from position identification unit 34, so refers to Receiving device management information 43 and judges that Receiving device covering reception area 54a including position 53 is Receiving device 8a. Further, it detects ID device 7a in reception area 54a of Receiving device 8a. ID device management information 44 is information linking ID devices and individuals to which the ID devices are attached. ID information identification unit 35 refers to ID device management information 44 to identify the individual having ID device 7a. In this way, ID information identification unit 35 can use the information on the position of the individual where a facial change has occurred to identify the individual where the facial change has occurred.

In this way, ID information identification unit 35 can use the position information to identify an ID device. For this reason, when ID information identification unit 35 is notified of position 53 of a monitored party where a facial change occurs, it refers to receiving device management information 43 and identifies that receiving devices in the surroundings of position 53 are receiving devices 8a and 8b. Further, ID information identification unit 35 can refer to ID device management information 44 to detect ID device 7b and ID device 7c illustrated in FIG. 4. It is possible to detect ID devices in the surroundings of an individual with such a facial change without regard as to the image, so it is also possible to detect individuals not included in the image.

The information of individuals present in the surroundings detected in this way is stored as one type of facial change related information 46 in secondary storage unit 11. By recording information of individuals in the surroundings in this way, it is possible to use the recorded data for statistical purposes. For example, it is also possible to identify whether the cause of a facial change was an individual in the surroundings or identify an individual which can easily cause a facial change in a specific individual.

Image enlargement unit 36 has the function of enlarging the facial expression of an individual recognized by facial expression recognition unit 32 and further cutting out that enlarged part to generate a new image. When camera 9 captures an image of a region larger than an individual, the part of the image of the individual with a facial change in the captured image becomes relatively smaller and recognition sometimes becomes difficult. Therefore, the image enlargement unit 36 enlarges the area in which the facial change occurred to generate an enlarged image.

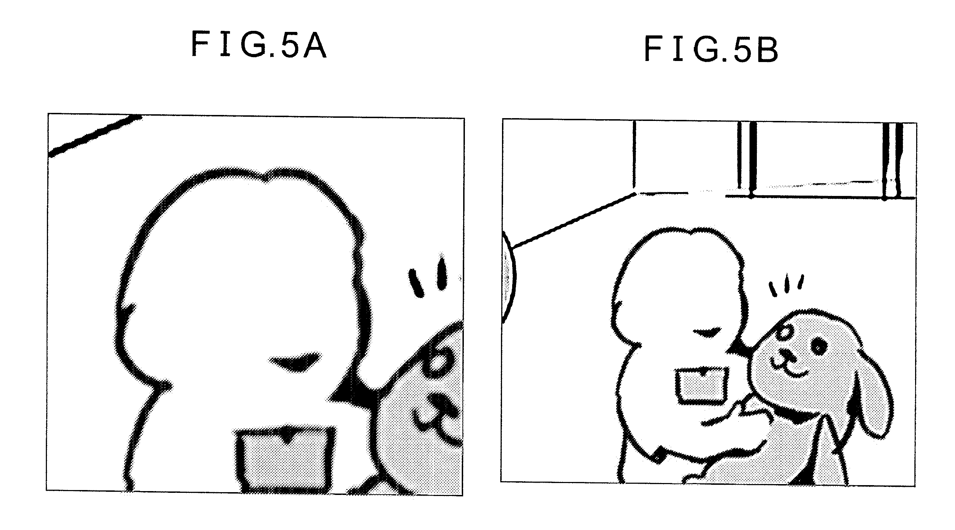

FIG. 5A illustrates an example of an image enlarging the image illustrated in FIG. 3. The image illustrated in FIG. 5A is an image enlarging the image of the individual illustrated in FIG. 3 so that the individual becomes seventh tenths of the image area and the background becomes three tenths of the image area. By using digital processing to enlarge the image in this way, the state of the facial change is illustrated clearly in the enlarged image. Since the facial change is enlarged and can be seen, when applying the monitoring system 1 to a nursery school or kindergarten, a monitoring party, that is, a parent of the child, can confirm the expression of his or her child having fun which he or she normally would not be able to see.

FIG. 5B illustrates an example of an image enlarging the image illustrated in FIG. 3. The image illustrated in FIG. 5B is an image enlarging the image of the individual where a facial change occurred illustrated in FIG. 3 so that the individual becomes three tenths of the image area and the background becomes seven tenths of the image area. By using digital processing to enlarge the image in this way, the image of an individual in which a facial change occurs becomes clearer and environment information of the surroundings of the individual in which the facial change occurred can be provided as an image. By enlarging the image to an extent where the background of the surroundings become clearer, it becomes possible to identify the individuals present in the surroundings and events performed by the individual in which the facial change occurred. The monitoring party can determine why the facial change occurred from the environment of the surroundings.

Note that depending on the environment being monitored, sometimes changes in facial expressions by a plurality of individuals will simultaneously occur. If referring again to FIG. 3, assume that individual 61 and individual 62 simultaneously have facial changes. In this case, the image enlargement unit 36 performs processing on the changes in facial expression for these individuals.

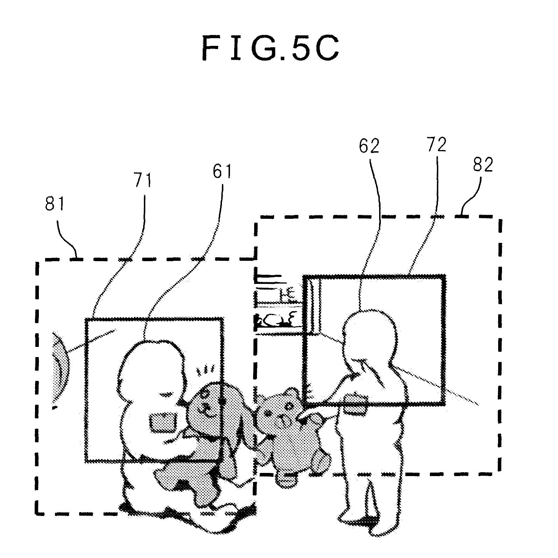

FIG. 5C illustrates an example of the image enlargement processing of image enlargement unit 36 when a plurality of changes in facial expressions occur.
Image enlargement unit 36 cuts out images so that the individuals become seventh tenths of the image areas and the backgrounds becomes three tenths of the image areas. Note that, these enlarged facial expression images can be referred to as "facial thumbnails" in this application. An image cut out for individual 61 in this way is illustrated by 71, while an image cut out for individual 62 is illustrated by 72. In this way, if changes in facial expressions occur in a plurality of individuals simultaneously, image enlargement unit 36 generates facial thumbnails for these individuals.

Furthermore, the image enlargement unit 36 cuts out images where the backgrounds of the surroundings become clear so that the individuals become three tenths of the image areas and the backgrounds becomes seven tenths of the image areas. Image enlargement unit 36 cuts out images centered around the facial thumbnails for the plurality of changed facial images from the captured image to generate images centered around the facial thumbnails. In this case, image enlargement unit 36 generates images where the individuals become three tenths of the image areas and the backgrounds become seven tenths of the image areas so that the centers of the facial thumbnails of the facial images where the facial changes occur become the centers of the image data. An image cut out for individual 61 in this way is illustrated by 81, while an image cut out for individual 62 is illustrated by 82. In this way, even if a plurality of facial changes occur in a monitored image, image enlargement unit 36 can enlarge the image for each individual where a change in facial image occurred and thereby provides a higher precision facial change detection function.

Transmission control unit 37 has the function of transmitting an image including facial information to a destination associated with the identified individual through a transmission device. The transmission control unit 37 refers to the image destination information 45 illustrated in FIG. 2 and transmits the image including the facial change to the destination address associated with the ID information of the individual through the network 21. The destination address sent to, for example, when applying the monitoring system 1 to a nursery school or kindergarten, is an IP address or an e-mail address of a computer 23 or communication terminal 24 of a monitoring party, that is, a parent of the child. The display of destination computer 23 or communication terminal 24 displays an image including the facial information. Note that, when changes in facial expressions simultaneously occur in a plurality of individuals, in the above example, transmission control unit 37 transmits the images 71 and 81 and the images 72 and 82 for the individuals 61 and 62 to the respective predetermined destination addresses.

In this way, by continually monitoring a monitored party and sending an image to the monitoring party only when a facial change occurs, it is possible to constantly monitor the monitored party and reduce the image monitoring load of the monitoring party. By giving processing unit 13 a processing speed sufficient for the amount of processing for executing the various functions, it is possible to instantly transmit any occurring facial change to the monitoring party. For this reason, the monitoring party can instantly receive an image including a facial change in a monitored party when such a facial change occurs.

Monitoring information management unit 38 stores images in which facial changes occur in the secondary storage unit 11. Further, monitoring information management unit 38 stores, along with facial change images, the times at which the facial changes occurred, information on the positions where the facial changes occurred, and information of the individuals present in the surroundings which the position identification unit 34 identifies as facial change related information 46 in the secondary storage unit 11.

In this way, by using related information relating to facial changes to identify individuals present in the surroundings or events which occurred at that time even if not captured in the image, which used to be performed by a monitored party, it is possible to identify the cause of a facial change of a monitored party. Further, by using related information relating to facial changes to obtain statistics on the time of facial changes and/or frequency of facial changes, it is possible to check the psychological balance of the individual being monitored.

Further, a monitoring control program 30 defining the functions of control unit 31 to monitoring information management unit 38 by a programming language is stored through a recording medium or network in an secondary storage unit 11 and thereby run by the processing unit 13 to be loaded as functions of the processing unit 13. For this reason, even for an already widespread system having a monitoring camera, by reading the monitoring control program 30, it is possible for the already widespread system having the monitoring camera load the functions of control unit 31 to monitoring information management unit 38.

Further, the monitoring control program 30 that is coded to make the processor executes such that the processor provides the functionality of control unit 31 to monitoring information managing unit 38 is stored in stored in secondary storage unit 11 via computer readable medium or network. Therefore, these functionality of control unit 31 to monitoring information managing unit 38 can be implemented to existing system that includes camera, by loading monitoring control program 30.

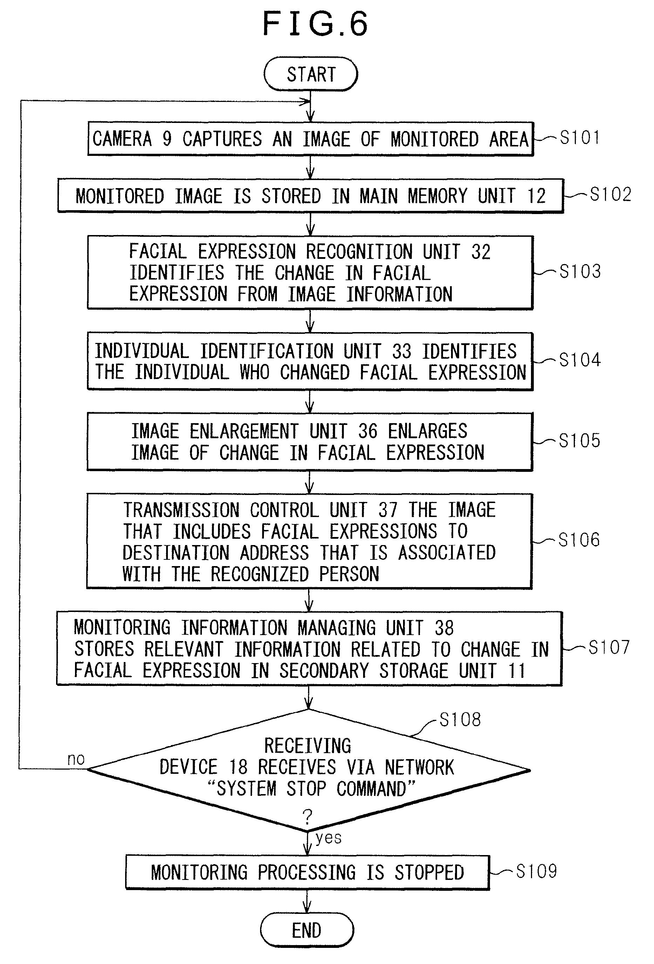

Referring to the FIG. 6, there is illustrated a flow chart of monitoring processing by monitoring system
1. At first, camera 9 captures an image of monitored area (S101). Processing unit 13 stores monitored image in secondary storage unit 11 or main memory unit 12 (S102). Facial expression recognition unit 32 reads image information that is stored in secondary storage unit 11 or main memory unit 12, and identifies the change in facial expression from image information (S103). Individual identification unit 33 identifies the individual with the change in facial expression in the image (S104). Further, this step can be executed by position identification unit 34 or ID information identification unit 35. In this case, position identification unit 34 specifies position of the individual with the change in facial expression in the image. ID information identification unit 35 specifies a receiving device that receives radio waves that is transmitted from an identification device in the position. Identification information specification unit 35 identifies the individual with the change in facial expression in the image by an identification information that is included in the radio waves.

Image enlargement unit 36 enlarges image of change in facial expressions (S105). Transmission control unit 37 transmits the image that includes facial expressions to destination address that is associated with the person identified in step S104 (S106).

Monitoring information managing unit 38 stores relevant information related to change in facial expressions in secondary storage unit 11 (S107). The relevant information is, for example, the image that includes face expression changes, the time when face expression changes, and the position of the individual with the change in facial expression in the image, and individuals present in the surroundings of an individual with a change in facial expression when the change in facial expressions. Processing unit 13 monitors whether or not receiving device 18 receives via network system stop command. If receiving device 18 does not receive system stop command (S108 No), processing unit 13 perform the above mentioned steps S101 to S107. If receiving device 18 receives system stop command (S108 Yes), processing unit 13 stops monitoring processing (S109), and then, monitoring process is terminated.

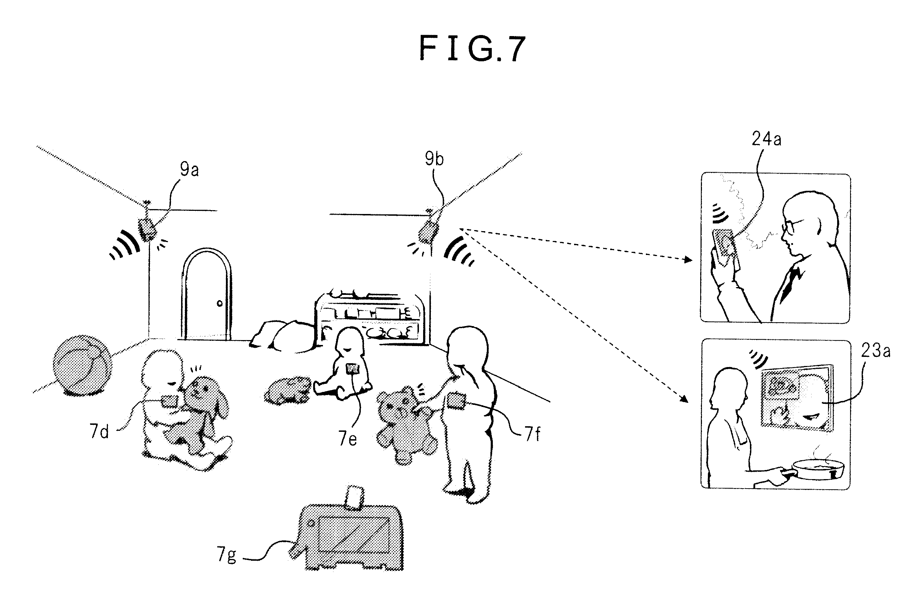

Referring to the FIG. 7, there is illustrated an example of monitoring system. In FIG.7, numerals 7d, 7e, 7f are identification device, and numeral 7g is a detailed example of identification device. Numerals 9a, 9g are monitoring device. Numeral 23a is a computer. Numeral 24a is communication terminal equipment. Identification device 7g is implemented as a name tag for kindergarten etc. In this way, the name tag can be always attached to the children. Identification devices 7d, 7e and 7f can be also implemented as the name tag.

Monitoring devices 9a, 9b are arranged so as to eliminate blind spots to monitored area. When monitoring device 20 (not illustrated in FIG. 7) detects the change in facial expressions, monitoring device 20 transmits an image that includes the change in facial expressions to destination address that are mother's computer 23 and father's communication terminal equipment 24. By displaying the image on mother's computer 23 and father's communication terminal equipment 24, father can know his child's change in facial expressions at work, and mother can know her child's change in facial expressions with housework.

All examples and conditional language recited herein are intended for pedagogical purposes to aid the reader in understanding the invention and the concepts contributed by the inventor to further the art and are to be construed as being without limitation to such specifically recited examples and conditions, nor does the organization of such examples in the specification relate to a illustrating of superiority and inferiority of the invention embodiments. Although the embodiments of the present invention has been described in detail, it should be understood that various changes, substitutions, and alterations could be made hereto without departing from the scope of the invention.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

In particular, invention embodiments extend to a computer program which, when executed on a computer causes the computer to perform a method embodying the present invention, for example, the method or methods as set out in the claims, or a part thereof. Furthermore, invention embodiments extend to a computer program or suite of programs which, when executed by a computer, cause the computer to become a monitoring system embodying the present invention, for example, the monitoring system as set out in the claims, or to become a part thereof.

## Claims

1. A monitoring system that monitors an individual, the monitoring system comprising:
a camera that captures an image of the individual;
a transmission device that transmits an image; and,
a processing device that is configured to:
detect a change in facial expression of the individual from an image captured by the camera;
identify the individual with the change in facial expression; and,
transmit to a destination associated with the identified individual an image including the change in facial expression through the transmission device.

2. The monitoring system according to claim 1, wherein the processing device is further configured to:
enlarge the facial image in the captured image to a predetermined size;
cut out the enlarged facial image from the captured image; and,
transmit the cut out enlarged facial image through the transmission device.

3. The monitoring system according to claim 1 or 2, wherein the processing device is further configured to:
cut out facial thumbnail from each of facial images, when the processing device detects a plurality of change in facial expressions in the captured image, the facial thumbnail that includes the change in facial expression.

4. The monitoring system according to any of claims 1 to 3, wherein the processing device is further configured to:
cut out face thumbnail from each of facial images, when the processing device detects a plurality of changes in facial expressions in the image, the facial thumbnail that includes the change in facial expression; and,
generate image that is centered on the facial thumbnail.

5. The monitoring system according to any of claims 1 to 4, wherein the processing device is further configured to:
transmit a facial image to each destination related to the each of facial images thorough the transmission device.

6. The monitoring system according to any of claims 1 to 5, wherein the processing device is further configured to identify individuals present in the surroundings of an individual with a change in facial expression when the change in facial expressions.

7. The monitoring system according to any of claims 1 to 6, the monitoring system further comprising memory unit,
wherein the processing device is further configured to store in the memory unit at least one of a time, position, and individuals present in the surroundings of an individual with a change in facial expression when the change in facial expressions.

8. The monitoring system according to any of claims 1 to 7, the monitoring system further comprising:
an identification device that is held by each of the individuals and that transmits a signal, the signal that includes identification information; and,
a receiving device that receives the signal being transmitted from the identification device,
wherein the processing for identifying an individual with the change in facial expression by the processing device is performed by:
identify an individual with the change in facial expression by the processing device being performed by identifying a position of the individual with the change in facial expression in the image;
identify the position of the receiving device that receives the signal sent by the identification device sent from that position; and,
identify the individual related to the identification information.

9. A method of monitoring an individual comprising:
detecting, by a processing device, a change in facial expressions from the image that is captured by an camera;
identifying, by the processing device, a individual related to the change in facial expression from the image; and,
transmitting a facial image to a destination related to the identified individual from, the facial image that includes the change in facial expression.

10. The method according to claim 9, further comprising:
enlarging, by the processing device, the facial image to predetermined size; and
transmitting the enlarged facial image to the destination.

11. The method according to claim 9 or 10, further comprising:
identifying, by the processing device, individuals present in the surroundings of an individual with the change in facial expression when the facial expression changes.

12. The method according to any of claims 9 to 11, further comprising storing in a memory unit at least one of time, position, individual data the individuals present in the surroundings of an individual with the change in facial expression when the facial expression changes.

13. A computer readable medium having a program of instructions for execution by a processor, the program comprising:
detecting instruction that make the processor to detect a change in facial expression from the image that is captured by an camera;
identifying instruction that make the processor to identify a individual related to the change in facial expression from the image; and,
transmitting instruction that make the processor to transmit a facial image to a destination related to the identified individual through the transmission device, the facial image that includes the change in facial expression.

14. The computer readable medium according to claim 13, the program further comprising:
enlarging instruction that make the processor to enlarge the facial image in the image to predetermined size; and
transmitting instruction that make the processor to transmit to the destination the enlarged facial image including the change in facial expression through the transmission device

15. The computer readable medium according to claim 13 or 14, the program further comprising:
identifying instruction that make the processor to identify an individual present in the surroundings of an individual with a change in facial expression when the facial expression changes; and/or
storing instruction that make the computer to store in a memory unit at least one of time, position, individuals present in the surroundings of an individual with a change in facial expression when the facial expression changes.
